# EUROPÄISCHE PATENTSCHRIFT

(11) **EP 3 321 011 B1**
(45) Veröffentlichungstag und Bekanntmachung des Hinweises auf die Patenterteilung: **24.04.2024**
(21) Anmeldenummer: 17198712.6
(22) Anmeldetag: 26.10.2017
(51) Int. Cl.: B22F 10/50, B22F 10/28, B22F 10/364, B22F 10/68, B22F 12/45, B33Y 10/00, B33Y 30/00, B29C 64/153, B22F 12/00, B33Y 40/00, B29C 64/35, B22F 3/24

(54) **VERFAHREN ZUR VERBESSERUNG DER OBERFLÄCHENQUALITÄT GENERATIV HERGESTELLTER BAUTEILE**
METHOD FOR IMPROVING THE SURFACE QUALITY OF COMPONENTS MADE BY ADDITIVE MANUFACTURING
PROCÉDÉ D'AMÉLIORATION DE LA QUALITÉ DE SURFACE DE COMPOSANTS OBTENUS PAR FABRICATION ADDITIVE

(30) Priorität: 10.11.2016 DE 102016121594
(43) Veröffentlichungstag der Anmeldung: 16.05.2018
(73) Patentinhaber: Fraunhofer-Gesellschaft zur Förderung der angewandten Forschung e.V., 80686 München (DE)
(72) Erfinder: Bürger, Laura, 85221 Dachau (DE); Risse, Jeroen, 52070 Aachen (DE); Kropp, Ralph, 85456 Wartenberg (DE)

(56) Entgegenhaltungen:
- EP-A1- 2 868 422
- JP-A- 2002 038 201

## Beschreibung

### HINTERGRUND DER ERFINDUNG

### GEBIET DER ERFINDUNG

Die vorliegende Erfindung betrifft ein Verfahren zur generativen Herstellung von Bauteilen durch schichtweises Aufbringen und stoffschlüssiges Verbinden von Pulvermaterial sowie eine Vorrichtung zur Durchführung eines entsprechenden Verfahrens.

### STAND DER TECHNIK

Generative Herstellungsverfahren zur Herstellung eines Bauteils werden in der Industrie für das sogenannte Rapid - Tooling, Rapid - Pototyping oder bei der Herstellung von Serienprodukten im Rahmen des Rapid - Manufacturing eingesetzt. Beispiele für generative Herstellungsverfahren sind das selektive Laserschmelzen, das selektive Lasersintern, das Elektronenstrahlschmelzen und vergleichbare Verfahren.

Bei diesen Verfahren wird das zu erzeugende Bauteil schichtweise aus Pulvermaterial aufgebaut, wobei das Pulvermaterial entsprechend der aufzubringenden Schicht in einer Pulverlage auf einem Substrat oder einem bereits hergestellten Teil eines Bauteils aufgebracht wird, um anschließend durch Aufschmelzen oder Sintern des Pulvers eine Verbindung des Pulvermaterials untereinander und zu dem Bauteil zu schaffen.

Um eine Pulverlage auf dem Bauteil zu erzeugen kann ein Pulverbett verwendet werden, in welchem der bereits erzeugte Teil des Bauteils angeordnet ist und in der Richtung des Aufbaus des Bauteils von einer Pulverlage überdeckt ist, die selektiv entsprechend der Kontur in der Schnittebene des zu erzeugenden Bauteils auf dem Bauteil abgeschieden werden soll. Die Oberfläche des Pulverbetts wird dabei so gewählt, dass zwischen dem bereits erzeugten Bauteil und der Oberfläche des Pulverbetts die Pulverlage mit der gewünschten Dicke vorliegt, die im nächsten Schritt als Festkörperschicht auf dem Bauteil durch Aufschmelzen oder Sintern und nachfolgende Wiedererstarren abgeschieden werden soll. Durch selektives Schmelzen oder Sintern entsprechend dem Schnittmuster des zu erzeugenden Bauteils in der jeweiligen Lage und nachfolgendes Erstarren können dreidimensionale Gegenstände erzeugt werden.

Aus dem Stand der Technik sind bereits entsprechende Vorrichtungen und Verfahren bekannt, wie sie unter anderem in der DE 10 2013 223 587A1 und der WO 2015/196 149 A1 beschrieben sind.

Allerdings besteht bei generativ hergestellten Produkten das Problem, dass die erzeugten Oberflächen sehr rau sind und so einer Nachbearbeitung bedürfen, die unter Umständen sehr aufwändig sein kann. Darüber hinaus kann es bei der Ausbildung von Hohlräumen dazu kommen, dass eine Nachbearbeitung der rauen Oberflächen des Hohlraums überhaupt nicht mehr möglich ist, so dass es durch die rauen Oberflächen und die dort möglichen Spannungsspitzen bei mechanischer Belastung zu einer Beeinträchtigung der Festigkeitseigenschaften des hergestellten Bauteils kommen kann.

Aus der Patentanmeldungsveröffentlichung JP 2002038201 A ist ein Verfahren bekannt, bei welchem ein Formkörper mittels eines Laserstrahls aus einem Pulver schrittweise durch Schichtabscheidung in einem Pulverbett gebildet wird. Dabei wird, nachdem mehrere Schichten abgeschieden worden sind, das Pulverbett bis zu einer bestimmten Tiefe um die Umfangsfläche des teilweise fertiggestellten Formkörpers herum entfernt ohne jedoch die Umfangsfläche des Formkörpers von Pulverablagerungen zu reinigen. Aus diesen Pulverablagerungen wird mittels eines weiteren Laserstrahls eine Oberflächenschicht gebildet, welche glatt und dicht ist, sodass der Oberfläche des Formkörpers eine höhere mechanische Widerstandsfähigkeit verliehen wird.

Bei dem in der Patentanmeldungsveröffentlichung EP 2868422 A1 beschriebenen Verfahren wird nach dem Abscheiden jeder Schicht deren Randbereichsoberfläche mit einem Ultrakurzpulslaser bestrahlt, um die Oberfläche des hergestellten Formkörpers zu glätten.

### OFFENBARUNG DER ERFINDUNG

### AUFGABE DER ERFINDUNG

Es ist deshalb Aufgabe der vorliegenden Erfindung ein Verfahren zu generativen Herstellung von Bauteilen bereitzustellen, bei welchem die Oberflächenrauheit des hergestellten Bauteils reduziert ist, so dass auf eine aufwändige Nachbearbeitung der Oberfläche verzichtet oder diese stark reduziert werden kann. Insbesondere soll somit ein Verfahren und eine entsprechende Vorrichtung zur Herstellung von generativ erzeugten Bauteilen bereitgestellt werden, die es ermöglichen, möglichst glatte Oberflächen bei den hergestellten Bauteilen zu erzeugen, wobei gleichwohl das Verfahren effizient und zuverlässig durchführbar sein soll und der Aufwand für eine entsprechende Vorrichtung gering gehalten werden soll.

### TECHNISCHE LÖSUNG

Diese Aufgabe wird gelöst mit einem Verfahren zur generativen Herstellung von Bauteilen mit den Merkmalen des Anspruchs 1.

Vorteilhafte Ausgestaltungen sind Gegenstand der abhängigen Ansprüche. Die vorliegende Erfindung schlägt zur Verbesserung der Oberflächenqualität von generativ hergestellten Bauteilen vor, dass nach dem Abscheiden einer Festkörperschicht, also nach dem Aufbringen von Pulvermaterial und stoffschlüssigem Verbinden des Pulvermaterials an sich und mit einem darunter liegenden Material eines Substrats oder eines bereits hergestellten Bauteils, zumindest die zuletzt abgeschiedene Festkörperschicht vom Pulvermaterial gereinigt wird und der Rand der Festkörperschicht vor dem Abscheiden der nächsten Festkörperschicht durch Erweichen des Materials nachbearbeitet wird. Dadurch lässt sich eine Glättung des Randes der Festkörperschicht und somit der Oberfläche des generativ hergestellten Bauteils erzielen.

Insbesondere können die Reinigung der Festkörperschicht von Pulvermaterial und die Nachbearbeitung nach jeder Abscheidung einer Festkörperschicht erfolgen und entsprechend auch die Nachbearbeitung des Randes der abgeschieden Festkörperschicht zwischen jeweils zwei aufeinander folgenden Abscheidungen von Festkörperschichten durchgeführt werden.

Bei der Reinigung der zuletzt abgeschiedenen Festkörperschicht zur Entfernung von lose haftendem Pulvermaterial können zusätzlich weitere Bereiche des bereit hergestellten Bauteils, also insbesondere eine oder mehrere bereits zu einem früheren Zeitpunkt abgeschiedene Festkörperschichten, die vorzugsweise benachbart zur zuletzt abgeschiedenen Festkörperschicht liegen, ebenfalls von Pulvermaterial gereinigt werden, so dass bei der Erweichung des Randbereichs der abgeschiedenen Festkörperschicht nicht bereits durch eine Nachbearbeitung geglättete Oberflächen durch Anhaften von Pulverpartikeln wieder beeinträchtig werden.

Die Reinigung der Festkörperschicht und/oder weiterer benachbarter Teile des bereits erzeugten Bauteils kann durch eine Vielzahl von verschiedenen Reinigungsmethoden erfolgen, die eine geeignete Entfernung von losem Pulvermaterial ermöglichen. Insbesondere können mechanische Verfahren zur Entfernung des Pulvermaterials, wie Bürsten, Abstreifen, oder auch berührungslose Methoden zur Entfernung von Pulvermaterial eingesetzt werden, wie beispielsweise das Absaugen oder das Sprühen oder Spritzen mit einem Fluid, insbesondere mit Druckluft oder anderen Gasen. Darüber hinaus umfasst erfindungsgemäß der Reinigungsschritt auch das Anheben des bereits hergestellten Bauteils aus einem umgebenden Pulverbett oder das Absenken eines umgebenden Pulverbetts.

Der Reinigungsschritt oder Teile davon können bei der Durchführung des Verfahrens auch mehrmals hintereinander durchgeführt werden.

Das stoffschlüssige Verbinden des Pulvermaterials wird durch selektives Bestrahlen mit einem hochenergetischen Strahl, wie z.B. durch selektives Laserstrahlschmelzen, selektives Laserstrahlsintern, selektives Elektronenstrahlschmelzen oder selektives Elektronenstrahlsinterr, durchgeführt.

Die Nachbearbeitung des Randes der abgeschiedenen Festkörperschicht durch Erwärmen des Materials wird entsprechend dem Verfahren zum stoffschlüssigen Verbinden des Pulvermaterials ebenfalls durch einen hochenergetischen Strahl, insbesondere einen Elektronen - oder Laser strahl vorgenommen, wobei bei der Nachbearbeitung mit einem hochenergetischen Strahl das Randmaterial der nachbearbeiteten Festkörperschicht durch Erwärmen erweicht wird und/oder aufgeschmolzen werden kann. Hierbei kann ein hochenergetischer Strahl eingesetzt werden, der von der gleichen oder einer separatent Strahlungsquelle erzeugt wird wie der hochenergetische Strahl zum stoffschlüssigen Verbinden des Pulvermaterials. Bei Verwendung der gleichen Strahlungsquelle können jedoch die Parameter bei der Erzeugung des hochenergetischen Strahls unterschiedlich gewählt werden. Zusätzlich oder alternativ ist es auch möglich den hochenergetischen Strahl nach der Erzeugung unterschiedlich zu beeinflussen bzw. zu formen, beispielsweise durch unterschiedliche Strahlaufweitung oder Fokussierung, um unterschiedliche Bearbeitungsbedingungen für das stoffschlüssige Verbinden und die Nachbearbeitung des stoffschlüssig verbundenen Materials einzustellen. Hierzu kann eine entsprechende Vorrichtung eine Strahlformungseinheit aufweisen.

Die Nachbearbeitung des Randes der Festkörperschicht vor dem Abscheiden der nächsten Festkörperschicht kann ebenso wie die Reinigung mehrmals erfolgen kann, sodass also eine mehrmalige Erweichung und/oder Aufschmelzung des Randes der Festkörperschicht vorgenommen werden kann.

Die Nachbearbeitung des Randes der Festkörperschicht und insbesondere das Aufschmelzen und Wiedererstarren können insbesondere im Vergleich zur Abscheidung der Festkörperschicht langsam durchgeführt werden, um zur Glättung der Oberfläche des Bauteils ausreichend Zeit für die erforderlichen Prozesse zur Verfügung zu stellen.

Bei dem Erwärmen des Randes der Festkörperschicht zum Erweichen und/oder Aufschmelzen des Randes der Festkörperschicht mit einem hochenergetischen Strahl kann der hochenergetische Strahl bei einer Leistung von 60 bis 90 %, insbesondere 70 bis 80 % der Leistung betrieben werden, die für die stoffschlüssige Verbindung des Pulvermaterials bei der Abscheidung der Festkörperschicht eingesetzt wird. Da bei einer Bearbeitung des Pulvermaterials zur stoffschlüssigen Verbindung bzw. bei einer Nachbearbeitung des Randes der Festkörperschicht der hochenergetische Strahl, beispielsweise ein Laser - oder Elektronenstrahl, relativ zum zu erzeugenden Bauteil bewegt wird, kann das Erwärmen zum Erweichen und/oder Aufschmelzen des Rands der Festkörperschicht bei einer Vorschubgeschwindigkeit des hochenergetischen Strahls relativ zum Bauteil durchgeführt werden, die 20 bis 50 %, insbesondere 30 bis 40 % der Vorschubgeschwindigkeit beträgt, die der hochenergetische Strahl bei der stoffschlüssigen Verbindung des Pulvermaterials bei der Abscheidung einer Festkörperschicht aufweist. Dadurch kann dem Material bei der Nachbearbeitung ausreichend Zeit für die Glättungsprozesse während des Erweichens und/oder Aufschmelzens des Randbereichs gegeben werden.

Eine Vorrichtung weist zur Durchführung des erfindungsgemäßen Verfahrens somit mindestens eine Reinigungsvorrichtung auf, die geeignet ist, das bereits hergestellte Bauteil mit zuletzt abgeschiedenen Festkörperschicht von Pulvermaterial zu befreien, bevor die Nachbearbeitung des Randes der abgeschiedenen Schicht durchgeführt wird. Eine entsprechende Reinigungsvorrichtung kann somit Vorrichtungen zum Bürsten und/oder Abstreifen und/oder zum Absaugen und/oder Abblasen von Pulvermaterial aufweisen. Darüber hinaus ist die Vorrichtung so eingerichtet, dass während des Betriebs der Reinigungsvorrichtung, wenn also Pulvermaterial von der zuletzt abgeschiedenen Festkörperschicht und vorzugsweise von weiteren angrenzenden Bereichen des Bauteils entfernt wird, eine Bauteilaufnahme, auf der das herzustellende Bauteil angeordnet ist, aus einem umgebenen Pulverbett angehoben bzw. das Pulverbett relativ zur Bauteilaufnahme abgesenkt werden kann.

### KURZBESCHREIBUNG DER FIGUREN

Die beigefügten Zeichnungen zeigen in rein schematischer Weise in
- Fig. 1: eine schematische Darstellung einer Ausführungsform einer erfindungsgemäßen Vorrichtung zur generativen Herstellung von Bauteilen am Beispiel des selektiven Laserschmelzens,
- Fig. 2: eine Darstellung des Verfahrensablaufs gemäß einem Ausführungsbeispiel des erfindungsgemäßen Verfahrens und in
- Fig. 3: eine Draufsicht auf ein Pulverbett und eine hergestellte Festkörperschicht.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen deutlich, wobei die Erfindung nicht auf diese Ausführungsbeispiele beschränkt ist.

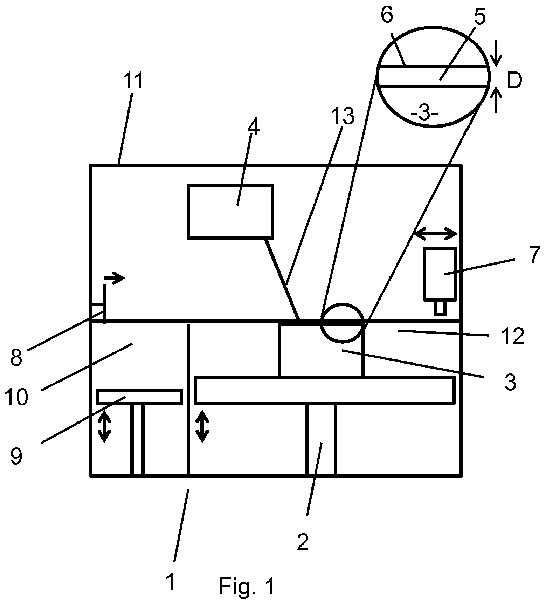

Die Figur 1 zeigt in einer rein schematischen Darstellung eine Vorrichtung 1, wie sie beispielsweise für das selektive Laserschmelzen zur generativen Herstellung eines Bauteils Verwendung finden kann. Die Vorrichtung 1 umfasst einen Hubtisch 2, auf dessen Plattform ein Halbzeug 3 (Teil eines Bauteils) angeordnet ist, auf dem schichtweise Material abgeschieden wird, um ein dreidimensionales Bauteil zu erzeugen. Hierzu wird mittels des Schiebers 8 Pulver 10, das sich oberhalb eines Hubtisches 9 in einem Pulvervorrat befindet, schichtweise über das Halbzeug 3 geschoben und anschließend durch den Laserstrahl 13 eines Lasers 4 durch Aufschmelzen mit dem bereits vorhandenen Halbzeug 3 verbunden. Die Verbindung des Pulvermaterials in einer Pulverschicht mit dem Halbzeug 3 erfolgt durch den Laser 4 abhängig von der gewünschten Kontur des zu fertigenden Bauteils, sodass beliebige, dreidimensionale Formen erzeugt werden können. Entsprechend wird der Laserstrahl 13 über das Pulverbett 12 geführt, um durch unterschiedliche Auftreffpunkte auf dem Pulverbett entsprechend der Kontur des dreidimensionalen Bauteils in der der herzustellenden Schichtebene entsprechenden Schnittebene Pulvermaterial aufzuschmelzen und mit dem bereits erzeugten Teil eines Bauteils oder einem anfänglich bereit gestellten Substrat zu verbinden. Hierbei kann der Laserstrahl 13 durch eine geeignete Ablenkeinheit über die Oberfläche des Pulverbetts 12 geführt werden und/oder das Pulverbett könnte gegenüber dem Laserstrahl 13 bewegt werden.

Um unerwünschte Reaktionen mit der Umgebungsatmosphäre beim Aufschmelzen oder Sintern zu vermeiden, kann der Prozess in einem abgeschlossenen Raum, der durch ein Gehäuse 11 der Vorrichtung 1 bereit gestellt wird, stattfinden und es kann zudem eine inerte Gasatmosphäre bereit gestellt werden, um beispielsweise Oxidation des Pulvermaterials und dergleichen beim Abscheiden zu vermeiden. Als inertes Gas kann beispielsweise Stickstoff verwendet werden, welches über eine nicht dargestellte Gasversorgung bereitgestellt werden kann.

Anstelle des Inertgases könnte auch ein anderes Prozessgas verwendet werden, wenn beispielsweise eine reaktive Abscheidung des Pulvermaterials gewünscht ist.

Darüber hinaus sind auch andere Strahlungsarten denkbar, wie beispielsweise Elektronenstrahlen oder andere Teilchenstrahlen oder Lichtstrahlen, die bei der Stereolithographie eingesetzt werden.

Der Schieber 8 ist gleichzeitig als Nivellier- und Glättungsschieber ausgebildet, um die Pulverlage oberhalb des Halbzeugs 3 zu glätten und auf eine bestimmte Lagendicke einzustellen. Allerdings ist es auch vorstellbar, dass der Schieber 8 lediglich die grobe Bereitstellung des Pulvermaterials bewirkt und ein zusätzlicher (hier nicht gezeigt) Nivellier- und Glättungsschieber eingesetzt wird.

Der Nivellier- und Glättungsschieber 8 dient dazu, die gewünschte Dicke D der Pulverlage 5, wie sie in der Detailansicht der Fig. 1 dargestellt ist, definiert einzustellen und zudem dafür zu sorgen, dass die Pulverbettoberfläche 6 der Pulverlage 5 glatt und eben ausgebildet ist, da ansonsten Ungenauigkeiten und Unregelmäßigkeiten im erzeugten Bauteil entstehen könnten.

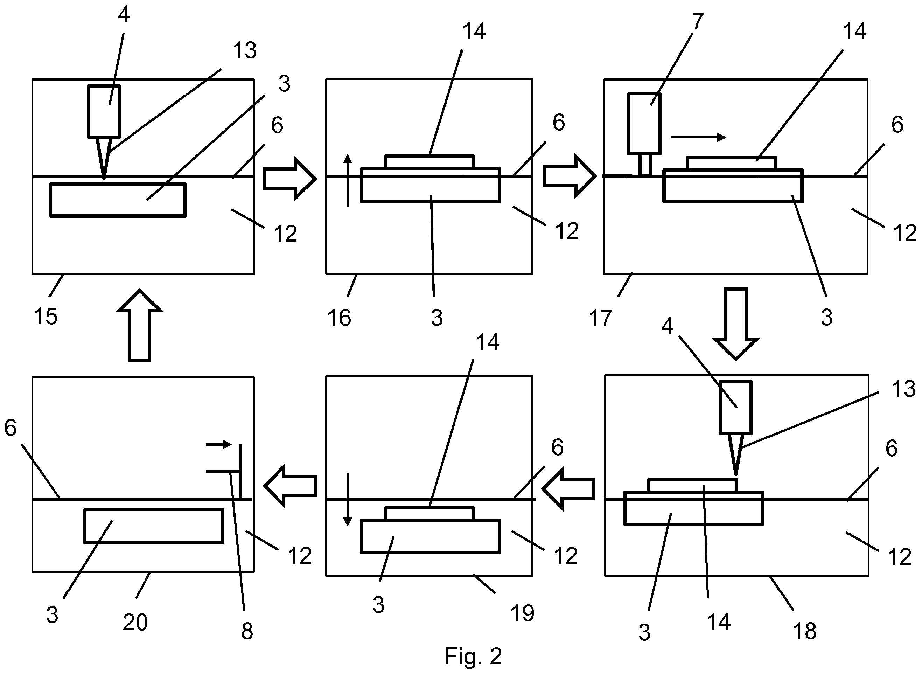

Die Vorrichtung 1 weist weiterhin eine Reinigungsvorrichtung in Form einer Bürste 7 auf, die zur Reinigung der zuletzt abgeschiedenen Festkörperschicht und des bereits hergestellten Bauteils 3 vor einer Nachbearbeitung des Rands der Festkörperschicht dient. Nachdem die Pulverlage 5 bzw. das darin vorliegende Pulvermaterial mit dem Laserstrahl 13 des Lasers 4 entsprechend der Form des herzustellenden Bauteils im Schnitt entlang der Pulverlage 5 aufgeschmolzen worden ist und nach dem Erstarren des aufgeschmolzenen Pulvermaterials zu einer Festkörperschicht 14 geworden ist (wie in den Darstellungen 15 und 16 in Figur 2 gezeigt) wird die Reinigungsvorrichtung in Form einer Bürste 7 eingesetzt, um die Festkörperschicht 14 sowie Teile des vorher erzeugten Bauteils von Pulvermaterial zu reinigen. Hierfür wird das Bauteil 3 mit dem Hubtisch 2 angehoben, so dass das Bauteil 3 zumindest mit der zuletzt erzeugten Festkörperschicht 14, vorzugsweise mit mehreren, beispielsweise 5 bis 20 der zuletzt erzeugten Festkörperschichten aus dem Pulverbett 12 ragt, so dass die Bürste 7 durch eine Bewegung entsprechend des Pfeiles in Figur 1 über das bereits hergestellte Bauteil 3 geführt werden kann, um durch die Bewegung relativ zum Bauteil 3 die zuletzt erzeugte Festkörperschicht sowie Teile des Bauteils 3 von losem Pulvermaterial zu reinigen.

Der Verfahrensablauf wird in der Figur 2 durch die Darstellungen 15 bis 20 detailliert dargestellt. Im Verfahrensschritt 1 gemäß der Darstellung 15 wird bei einer in Figur 2 nicht näher dargestellten Pulverlage durch den Laserstrahl 13 des Lasers 4 das Pulvermaterial teilweise entsprechend der Form des herzustellenden Bauteils 3 aufgeschmolzen und bildet so nach dem Erstarren eine Festkörperschicht 14 entsprechend der Schnittebene des herzustellenden Bauteils 3 aus. Im zweiten Verfahrensschritt gemäß der Darstellung 16 wird das Bauteil 3 mit der darauf erzeugten Festkörperschicht 14 aus dem Pulverbett 12 angehoben, so dass das Bauteil 3 zumindest mit der zuletzt erzeugten Festkörperschicht 14 sowie vorzugsweise weiteren, vorher erzeugten Festkörperschichten aus dem Pulverbett hervorragt. Dann wird im dritten Verfahrensschritt der Darstellung 17 die Bürste 7, die beispielsweise eine Bürste sein kann, wie sie in der DE 10 2013 223 587A1 offenbart ist, über den vom Pulverbett 12 hervorstehenden Teil des bereits hergestellten Bauteils 3 geführt, um die zuletzt erzeugte Festkörperschicht 14 und angrenzende Teile des bereits vorher hergestellten Bauteils 3 vom Pulvermaterial zu befreien. Der Reinigungsschritt kann mehrmals hintereinander wiederholt werden, so dass die Bürste mehrmals hin und her bewegt werden kann, um loses Pulvermaterial zu entfernen.

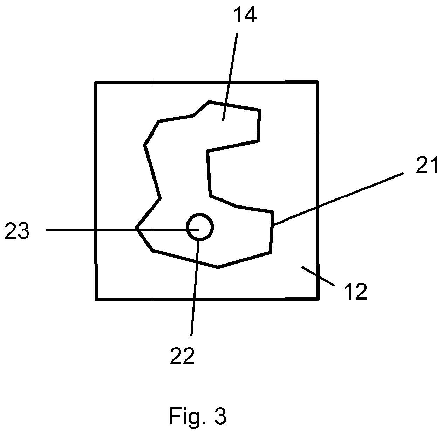

Nachdem der Reinigungsschritt gemäß der Darstellung 17 abgeschlossen ist, wird entlang des Randes der Festkörperschicht 14 eine Nachbearbeitung durch erneutes Aufschmelzen des Randes mittels Laserstrahl 13 des Lasers 4 durchgeführt, so dass eine Glättung des Randbereichs und somit der Oberfläche des herzustellendes Bauteils 3 erreicht werden kann. Dies ist in Figur 3 dargestellt, die eine Draufsicht auf ein Pulverbett 12 zeigt, wobei durch das Aufschmelzen und Wiedererstarren des Pulvermaterials eine Festkörperschicht 14 erzeugt worden ist, die einen umlaufenden äußeren Rand 21 sowie einen inneren Rand 22 zu Begrenzung eines inneren Hohlraumes 23 aufweist. Die Nachbearbeitung des Randes 21,22 der Festkörperschicht 14 erfolgt sowohl entlang des äußeren Randes als auch entlang des inneren Randes 21, der den Hohlraum 23 begrenzt.

Nach der Nachbearbeitung des Randes 21,22 der zuletzt aufgebrachten Festkörperschicht 14 wird der Hubtisch 2 mit dem darauf angeordneten Bauteil 3 wieder im Pulverbett 12 abgesenkt (5. Verfahrensschritt gemäß der Darstellung 19) und es wird gemäß Verfahrensschritt 6 nach der Darstellung 20 eine neue Pulverlage 5 mit dem Schieber 8 aufgebracht, so dass eine erneute Abscheidung einer Festkörperschicht 14 mit dem Verfahrensschritt 1 gemäß der Darstellung 15 beginnen kann. Wie sich aus den Pfeilen zwischen den Darstellungen 15 bis 20 ergibt, können die Verfahrensschritte 1 bis 6 wiederholt zur Abscheidung einer Vielzahl von Festkörperschichten 14 durchgeführt werden, bis das herzustellende Bauteil fertig ist.

In den gezeigten Ausführungsbeispielen sind zwei unterschiedliche Vorrichtungen zum einen zur Reinigung der zuletzt abgeschiedenen Festkörperschicht und weiteren Teilen des bereits hergestellten Bauteils 3 sowie zum anderen zur Aufbringungen einer Pulverlage vorgesehen. Allerdings können die Reinigungsvorrichtung bzw. Teile davon und die Vorrichtung zur Aufbringung einer Pulverlage, also die Bürste 7 und der Schieber 8, in einzigen Vorrichtung integriert sein, so dass eine Bürste bzw. ein Nivellierungs - und Glättungsschieber sowohl zur Aufbringung einer Pulverlage als auch zur Reinigung des bereits hergestellten Bauteils vor dem Nachbearbeiten der Randkontur eingesetzt werden kann.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Änderungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Die vorliegende Offenbarung schließt sämtliche Kombinationen der vorgestellten Einzelmerkmale mit ein.

### BEZUGSZEICHENLISTE

- 1: Vorrichtung
- 2: Hubtisch
- 3: Halbzeug
- 4: Laser
- 5: Pulverlage
- 6: Pulverbettoberfläche
- 7: Bürste
- 8: Schieber
- 9: Hubtisch
- 10: Pulver
- 11: Gehäuse
- 12: Pulverbett
- 13: Laserstrahl
- 14: Festkörperschicht
- 15: Verfahrensschritt 1
- 16: Verfahrensschritt 2
- 17: Verfahrensschritt 3
- 18: Verfahrensschritt 4
- 19: Verfahrensschritt 5
- 20: Verfahrensschritt 6
- 21: Rand der Festkörperschicht
- 22: Rand der Festkörperschicht
- 23: Hohlraum

## Patentansprüche

1. Verfahren zur generativen Herstellung von Bauteilen durch schichtweises Aufbringen von Pulvermaterial auf einem Substrat oder einem vorher hergestellten Teil eines Bauteils und zumindest teilweise stoffschlüssiges Verbinden des Pulvermaterials in der Pulverschicht entsprechend der Bauteilschnittkontur entlang der Pulverschicht und mit einem darunter liegenden Festkörpermaterial des Bauteils oder Substrats zur Ausbildung von mehreren übereinander angeordneten Festkörperschichten (14), wobei das stoffschlüssige Verbinden des Pulvermaterials durch einen hochenergetischen Strahl, insbesondere durch selektives Laserschmelzen oder - sintern oder durch selektives Elektronenstrahlschmelzen oder - sintern erfolgt, wobei nach dem stoffschlüssigen Verbinden des Pulvermaterials die soeben erzeugte Festkörperschicht (14) an ihrer Oberseite von Pulvermaterial gereinigt und vor dem Abscheiden der nächsten Festkörperschicht der Rand (21,22) der Festkörperschicht durch Erwärmen des Materialverbunds nachbearbeitet wird, wobei das Erwärmen des Rands der abgeschiedenen Festkörperschicht entsprechend dem Verfahren zum stoffschlüssigen Verbinden des Pulvermaterials ebenfalls durch einen hochenergetischen Strahl, der auf die Oberseite der abgeschiedenen Festkörperschicht gerichtet ist, vorgenommen wird, **dadurch gekennzeichnet, dass**
der Reinigungsschritt das Anheben des bereits hergestellten Bauteils aus einem umgebenden Pulverbett oder das Absenken eines umgebenden Pulverbetts umfasst.

2. Verfahren nach Anspruch 1,
**dadurch gekennzeichnet, dass**
die Reinigung der Festkörperschicht (14) von Pulvermaterial und die Nachbearbeitung nach jeder Abscheidung einer Festkörperschicht erfolgen.

3. Verfahren nach einem der vorhergehenden Ansprüche,
**dadurch gekennzeichnet, dass**
die Reinigung der Festkörperschicht (14) die Entfernung von Pulvermaterial von einer oder mehreren abgeschiedenen Festkörperschichten, welche vor der letzten Festkörperschicht abgeschieden worden sind, umfasst.

4. Verfahren nach einem der vorhergehenden Ansprüche,
**dadurch gekennzeichnet, dass**
die Reinigung der Festkörperschicht (14) durch mindestens eine Methode aus der Gruppe erfolgt, die mechanisches Entfernen des Pulvermaterials, Bürsten, Abstreifen, Absaugen, Reinigen durch Sprühen oder Spritzen mit einem Fluid und Abblasen mit Druckluft oder anderen Gasen umfasst.

5. Verfahren nach einem der vorhergehenden Ansprüche,
**dadurch gekennzeichnet, dass**
die Nachbearbeitung des Rands (21,22) der Festkörperschicht vor der Abscheidung der nächsten Festkörperschicht mehrmals erfolgt.

6. Verfahren nach einem der vorhergehenden Ansprüche,
**dadurch gekennzeichnet, dass**
das Erwärmen des Rands (21,22) der Festkörperschicht zum Erweichen und/oder Aufschmelzen des Rands der Festkörperschicht führt und durch einen hochenergetischen Strahl, insbesondere durch Laser - oder Elektronenstrahlen erfolgt.

7. Verfahren nach Anspruch 6,
**dadurch gekennzeichnet, dass**
das Erweichen und/oder Aufschmelzen des Rands (21,22) der Festkörperschicht mit 60 bis 90 %, insbesondere 70 bis 80 % der Leistung des hochenergetischen Strahls erfolgt, mit der die stoffschlüssige Verbindung des Pulvermaterials bei der Abscheidung einer Festkörperschicht erfolgt.

8. Verfahren nach Anspruch 6 oder 7,
**dadurch gekennzeichnet, dass**
das Erweichen und/oder Aufschmelzen des Rands (21,22) der Festkörperschicht mit 20 bis 50 %, insbesondere 30 bis 40 % einer Vorschubgeschwindigkeit des hochenergetischen Strahls erfolgt, mit der der hochenergetische Strahl bei der stoffschlüssigen Verbindung des Pulvermaterials bei der Abscheidung einer Festkörperschicht bewegt wird.

9. Verfahren nach einem der vorhergehenden Ansprüche,
**dadurch gekennzeichnet, dass**
der hochenergetische Strahl für die Nachberarbeitung durch Erwärmen aus derselben Strahlquelle stammt wie der hochenergetische Strahl zum stoffschlüssigen Verbinden des Pulvermaterials, wobei insbesondere die Strahlen für die Nachbearbeitung und stoffschlüssige Verbindung unterschiedlich erzeugt und/oder unterschiedlich beeinflusst oder geformt werden.

## Claims

1. Method for the additive manufacturing of components by applying powder material layer by layer on a substrate or a previously manufactured part of a component and at least partially materially bonding the powder material in the powder layer according to the sectional contour of the component along the powder layer and with an underlying solid-state material of the component or substrate to form a plurality of solid-state layers (14) arranged one above the other, wherein the material-bonding of the powder material is performed by a high-energy beam, in particular by selective laser melting or sintering, or by selective electron beam melting or sintering, wherein after the material-bonding of the powder material, the recently-produced solid layer (14) is cleaned from powder material on its upper face and, before the next solid-state layer is deposited, the edge (21, 22) of the solid-state layer is reworked by heating the material compound, wherein the heating of the edge of the deposited solid-state layer according to the method for materially bonding the powder material is also performed by a high-energy beam which is directed onto the upper face of the deposited solid-state layer,
**characterised in that**
the cleaning step comprises lifting the already manufactured component from a surrounding powder bed or lowering a surrounding powder bed.

2. The method according to claim 1,
**characterised in that**
the cleaning of the solid-state layer (14) from powder material and the reworking are performed after each deposition of a solid-state layer.

3. The method according to the preceding claims,
**characterised in that**
the cleaning of the solid-state layer (14) comprises the removal of powder material from one or more deposited solid-state layers that have been deposited before the last solid-state layer.

4. The method according to the preceding claims,
**characterised in that**
the cleaning of the solid-state layer (14) is performed by at least one method from the group comprising mechanically removing the powder material, brushing, wiping off, sucking off, cleaning by spraying or injecting a fluid and blowing off with compressed air or other gases.

5. The method according to the preceding claims,
**characterised in that**
the reworking of the edge (21, 22) of the solid-state layer is performed several times before the next solid-state layer is deposited.

6. The method according to the preceding claims,
**characterised in that**
the heating of the edge (21, 22) of the solid-state layer leads to softening and/or melting of the edge of the solid-state layer and is performed by a high-energy beam, in particular by laser beams or electron beams.

7. The method according to claim 6,
**characterised in that**
the softening and/or melting of the edge (21, 22) of the solid-state layer is performed at 60 to 90%, in particular 70 to 80%, of the power of the high-energy beam, with which the material-bonding of the powder material is performed during the deposition of a solid-state layer.

8. The method according to claim 6 or 7,
**characterised in that**
the softening and/or melting of the edge (21, 22) of the solid-state layer is performed at 20 to 50%, in particular 30 to 40%, of a feed rate of the high-energy beam, at which the high-energy beam is moved during the material-bonding of the powder material during the deposition of a solid-state layer.

9. The method according to any of the preceding claims,
**characterised in that**
the high-energy beam for the reworking by heating comes from the same beam source as the high-energy beam for material-bonding of the powder material, wherein in particular the beams for the reworking and material-bonding are generated differently and/or influenced or shaped differently.

## Revendications

1. Procédé de fabrication générative de composants par application par couches de matériau en poudre sur un substrat ou une partie préalablement fabriquée d'un composant et liaison au moins partiellement par accouplement de matière du matériau en poudre dans la couche de poudre conformément au contour de coupe de composant le long de la couche de poudre et avec un matériau de corps solide sous-jacent du composant ou du substrat pour former plusieurs couches de corps solide (14) disposées les unes au-dessus des autres, dans lequel la liaison par accouplement de matière du matériau en poudre est réalisée par un faisceau à haute énergie, en particulier par fusion ou frittage sélectif au laser ou par fusion ou frittage sélectif par faisceau d'électrons, dans lequel après la liaison par accouplement de matière du matériau en poudre, la couche de corps solide (14) qui vient d'être produite est nettoyée sur son côté supérieur du matériau en poudre et, avant la séparation de la couche de corps solide suivante, le bord (21, 22) de la couche de corps solide est fini par chauffage de l'assemblage de matériaux, dans lequel le chauffage du bord de la couche de corps solide séparée est également effectué, conformément au procédé de liaison par accouplement de matière du matériau en poudre, par un faisceau à haute énergie dirigé vers la face supérieure de la couche de corps solide séparée,
**caractérisé en ce que**
l'étape de nettoyage comprend le soulèvement de la pièce déjà fabriquée depuis un lit de poudre environnant ou l'abaissement d'un lit de poudre environnant.

2. Procédé selon la revendication 1,
**caractérisé en ce que**
le nettoyage de la couche de corps solide (14) du matériau en poudre et la finition sont effectués après chaque séparation d'une couche de corps solide.

3. Procédé selon l'une quelconque des revendications précédentes, **caractérisé en ce que**
le nettoyage de la couche de corps solide (14) comprend l'élimination du matériau en poudre d'une ou de plusieurs couches de corps solide séparées qui ont été séparées avant la dernière couche de corps solide.

4. Procédé selon l'une quelconque des revendications précédentes,
**caractérisé en ce que**
le nettoyage de la couche de corps solide (14) est effectué par au moins un procédé parmi le groupe comprenant l'élimination mécanique du matériau en poudre, le brossage, le raclage, l'aspiration, le nettoyage par pulvérisation ou par projection d'un fluide et le soufflage avec de l'air comprimé ou d'autres gaz.

5. Procédé selon l'une quelconque des revendications précédentes,
**caractérisé en ce que**
la finition du bord (21, 22) de la couche de corps solide est effectuée plusieurs fois avant la séparation de la couche de corps solide suivante.

6. Procédé selon l'une quelconque des revendications précédentes, **caractérisé en ce que**
le chauffage du bord (21, 22) de la couche de corps solide entraîne un ramollissement et/ou une fusion du bord de la couche de corps solide et s'effectue au moyen d'un faisceau à haute énergie, en particulier d'un faisceau laser ou d'un faisceau d'électrons.

7. Procédé selon la revendication 6,
**caractérisé en ce que**
le ramollissement et/ou la fusion du bord (21, 22) de la couche de corps solide s'effectue avec 60 à 90 %, en particulier 70 à 80 % de la puissance du faisceau à haute énergie avec laquelle s'effectue la liaison par accouplement de matière du matériau en poudre lors de la séparation d'une couche de corps solide.

8. Procédé selon la revendication 6 ou 7,
**caractérisé en ce que**
le ramollissement et/ou la fusion du bord (21, 22) de la couche de corps solide s'effectue avec 20 à 50 %, en particulier 30 à 40 % d'une vitesse d'avance du faisceau à haute énergie, à laquelle le faisceau à haute énergie est déplacé lors de la liaison par accouplement de matière du matériau en poudre lors de la séparation d'une couche de corps solide.

9. Procédé selon l'une quelconque des revendications précédentes,
**caractérisé en ce que**
le faisceau à haute énergie pour la finition par chauffage provient de la même source de faisceau que le faisceau à haute énergie pour la liaison par accouplement de matière du matériau en poudre, dans lequel les faisceaux pour la finition et la liaison par accouplement de matière sont en particulier produits et/ou influencés ou formés différemment.
